# EUROPÄISCHE PATENTANMELDUNG

(11) **EP 2 163 355 A1**
(43) Veröffentlichungstag der Anmeldung: **17.03.2010**
(21) Anmeldenummer: 08016148.2
(22) Anmeldetag: 12.09.2008
(51) Int. Cl.: B25D 16/00

(54) **Elektrowerkzeug umfassend einen Taumeltrieb oder Kurbeltrieb mit reduzierter Masse**

(71) Anmelder: AEG Electric Tools GmbH, 71364 Winnenden (DE)
(72) Erfinder: Felger, Reiner, 71404 Korb (DE); Klöpfer, Hans, 71364 Winnenden (DE); Palmer, Tobias, 73666 Baltmannsweiler (DE); Scheib, Markus, 71540 Murrhardt (DE)
(74) Vertreter: HOFFMANN EITLE

(57) **Zusammenfassung**

Elektrowerkzeug, insbesondere Bohr- und/oder Meißelhammer oder Säbelsäge, umfassend: eine antreibbare Welle (10), ein Werkzeug; und einen Taumeltrieb oder einen Kurbeltrieb zum Übertragen einer Antriebskraft von der Welle (10) auf das Werkzeug, wobei wenigstens ein Element des Taumel- oder Kurbeltriebs aus einem Leichtmetall gebildet ist und/oder eine Materialentnahmestelle (1, 2, 3) aufweist, die ausschließlich der Reduzierung der Masse des entsprechenden Elements dient.

## Beschreibung

Die vorliegende Erfindung betrifft ein Elektrowerkzeug und insbesondere einen Bohr- und/oder Meißelhammer oder eine Säbelsäge nach den Merkmalen des Oberbegriffs von Anspruch 1 oder Anspruch 2.

Ein derartiges Elektrowerkzeug ist als Beispiel für einen Taumeltrieb aus der DE-OS-3 732 288 oder als Beispiel für einen Kurbeltrieb aus der DE 35 11 437 A1 bekannt.

Derartige Elektrowerkzeuge weisen ein Schlagwerk sowie ein Getriebe, das eine Antriebkraft von der Antriebswelle auf das Schlagwerk überträgt, auf. Über das Getriebe wie auch das Schlagwerk werden betriebsbedingt Vibrationen erzeugt, die sich von dem Elektrowerkzeug über dessen Handhabe/-n auf die Hand bzw. den Arm des Benutzers fortsetzen. Derartige Vibrationen sind sowohl aus diesem Grund als auch zur Erhöhung der Standzeit des Elektrowerkzeugs zu reduzieren.

Die Aufgabe der vorliegenden Erfindung besteht daher darin ein eingangs genanntes Elektrowerkzeug derart weiterzubilden, dass die betriebsbedingt erzeugten Vibrationen verringert sind.

Der Erfindung liegt die Erkenntnis zu Grunde, dass die Masse der im Betrieb bewegten Elemente des Elektrowerkzeugs direkt proportional zu den erzeugten Vibrationen ist. Basierend auf dieser Erkenntnis schlägt die vorliegende Erfindung die Reduzierung der Masse des Taumel- bzw. Kurbeltriebs zum Übertragen der Antriebskraft von der Welle auf das Schlagwerk vor, wodurch die Masse der bewegten Elemente (hier dem Taumeltrieb bzw. dem Kurbeltrieb) reduziert ist und zu einer Reduzierung der Vibrationen führt. Daraus resultiert eine Standzeiterhöhung sowie als zusätzlicher Vorteil eine Gewichtsreduzierung des gesamten Elektrowerkzeugs.

Gemäß einer ersten Ausführungsform umfasst das Elektrowerkzeug, bei dem es sich insbesondere um einen Bohr- und/oder Meißelhammer oder eine Säbelsäge handelt, eine antreibbare Welle und ein Werkzeug, das eine Hin- und Herbewegung ausführen soll. Ferner kann bei einem Hammer ein Schlagwerk vorgesehen sein. Bei der angetriebenen Welle kann es sich z. B. um die Ankerwelle eines Elektromotors oder um eine Vorgelegewelle handeln. Das Schlagwerk kann von herkömmlicher Art sein und sich aus einem Schlagkörper und einem Döpper zusammensetzen, wobei der Schlagkörper über ein Luftpolster bewegt wird. Das Werkzeug kann beispielsweise ein Meißel, ein Bohrer oder ein Sägeblatt sein. Ferner umfasst das Elektrowerkzeug einen Taumeltrieb zum Übertragen einer Antriebskraft von der Welle auf das Werkzeug und/oder das Schlagwerk, d. h. zum Umsetzen der Rotationsbewegung der Welle in eine tranlatorische Bewegung. Hierzu umfasst der Taumeltrieb eine über die Welle drehbare Nabe, die direkt oder indirekt formschlüssig mit der antreibbare Welle verbunden sein kann. Ferner ist ein relativ zur Nabe derart gelagerter, radial nach außen ragender Finger vorgesehen, dass sich das distale Ende des Fingers, d. h. das Ende Fingers, das von der Nabe weg weist, hin und her bewegt. Hierfür kann der Finger beispielsweise an einem die Nabe umgebenden Ring angeformt bzw. anprofiliert sein. Der Ring bildet den Außenring eines Kugellagers, wohingegen eine Nut in der Nabe einen Innenring bildet. Ferner umfasst der Taumeltrieb ein Verbindungselement (eine Führungsaufnahme), das das distale Ende des Fingers aufnimmt und die Verbindung zwischen dem Finger und einem Zylinder, insbesondere einem Hohlzylinder (hohlzylindrischer Kolben) bildet, wobei der Zylinder vorzugsweise translatorisch in einem zylindrischen Element z. B. einer Bohrspindel verschieblich geführt ist. Gemäß der vorliegenden Erfindung kennzeichnet sich das Elektrowerkzeug dadurch, dass wenigstens der Finger, das Verbindungselement (die Führungsaufnahme) oder der Zylinder, vorzugsweise jedoch wenigstens zwei davon und am meisten bevorzugt alle, eine Materialentnahmestelle aufweisen, die ausschließlich der Reduzierung der Masse des Fingers, der Führungsaufnahme bzw. des Kolbens, d. h. des jeweiligen Elements, dient. Ausschließlich bedeutet in diesem Zusammenhang, dass die Materialentnahmestellen keine anderen funktionswesentlichen Aufgaben übernehmen, d. h. die Materialentnahmestellen wären im Prinzip nicht notwendig. Darüber hinaus bedeutet der Begriff Materialentnahmestelle, dass ein Bereich des entsprechenden Elements gezielt ausgespart ist (Materialaussparung), um die Masse zu reduzieren. Alternativ oder zusätzlich kann wenigstens eines der genannten Elemente, bevorzugt wenigstens der Zylinder, aus einem Leichtmetall oder einem Kunststoff gebildet sein. Leichtmetall ist dabei ein Metall mit einer Dichte von weniger als 4,5g/cm³, bevorzugt Titan, Aluminium oder Magnesium bzw. Legierungen davon. Dadurch wird im Vergleich zum Stand der Technik die Masse des Taumeltriebs und damit der bewegten Elemente des Elektrowerkzeugs reduziert. Durch diese Reduzierung der Masse werden gleichfalls die betriebsbedingten Vibrationen des Elektrowerkzeugs im Betrieb reduziert und dadurch die Standzeiten erhöht. Darüber hinaus erfolgt gleichzeitig eine Reduzierung des Gesamtgewichts des Elektrowerkzeugs. Bereits eine geringe Gewichtsreduzierung führt dabei zu einer deutlichen Vibrationsreduzierung. Darüber hinaus sind keine strukturellen Änderungen der übrigen Elemente des Elektrowerkzeugs notwendig.

Ein Elektrowerkzeug gemäß einer zweiten Ausführungsform umfasst das Elektrowerkzeug im Unterschied zu dem oben beschriebenen einen Kurbeltrieb zum Übertragen einer Antriebskraft von der Welle auf das Werkzeug, wobei der Kurbeltrieb umfasst: eine über die Welle drehbare Kurbel, einen exzentrisch an der Kurbel befestigten nach außen ragenden Finger, ein auf dem Finger drehbar gelagertes Übertragungsglied, insbesondere ein Pleuel, das über ein Verbindungselement drehbar an einem Zylinder befestigt ist, wodurch sich der Zylinder bei einer Rotation der Kurbel hin und her bewegt. Bezüglich einer genaueren Erläuterung eines Kurbeltriebs wird auf die eingangs genannte DE 35 11 437 A1 verwiesen. Erfindungsgemäß sind wenigstens der Finger, das Verbindungselement oder der Zylinder aus einem Leichtmetall oder Kunststoff gebildet und/oder weisen eine Materialentnahmestelle auf, die ausschließlich der Reduzierung der Masse des Fingers, des Verbindungselements bzw. des Zylinders dient. Um Wiederholung zu vermeiden wird insbesondere in Bezug auf das Verständnis einzelner Begriffe auf die obigen Ausführungen verwiesen.

Um die Masse des Taumeltriebs bzw. des Kurbeltriebs und damit die Vibrationen zu reduzieren und gleichzeitig die Herstellbarkeit und die Kosten in einem akzeptablem Rahmen zu halten, kann es vorteilhaft sein, wenigstens den Finger, das Verbindungselement oder den Zylinder aus Magnesium oder einer Magnesiumlegierung zu bilden.

Gemäß einer bevorzugten Ausführungsform kann die Materialentnahmestelle in dem Zylinder durch eine Vertiefung in dessen Außenfläche gebildet sein, die sich vorzugsweise vollständig über den Umfang des Zylinders erstreckt und einfach durch Drehen (Quer-Stech-Drehen) hergestellt sein kann.

Um geführte Anlageflächen des Zylinders in einem zylindrischen Element, z. B. der Bohrspindel, zu schaffen, ist es bevorzugt die Vertiefung beidseits durch umlaufende flächige Bereiche, d. h. flächige Ringe, zu begrenzen, wobei die Flächen dieser Bereiche entlang der Innenwandung des zylindrischen Elements, z. B. der Bohrspindel, geführt sind.

Weiter kann es bevorzugt sein, die flächigen Bereiche jeweils einer Oberflächenvergütung zu unterziehen, um sie an die Anforderung bezüglich der Führung anzupassen. Insbesondere ist dies bei Verwendung von Leichtmetallen sinnvoll. Dabei kann es sich beispielsweise um eine Öberflächenbehandlung, bspw. Anodisierung, Eloxierung oder Keramisierung, handeln, wodurch die Härte der Oberfläche zunimmt. Andererseits kann jedoch auch eine Beschichtung erfolgen. Dabei ist es zusätzlich von Vorteil, dass durch die Anodisierung die Rauhigkeit der Oberfläche abnimmt und damit die Reibung zwischen den Oberflächen und der Innenwandung der Bohrspindel reduziert ist. Es kommen daher sowohl härtende als auch die Reibung reduzierende Oberflächenvergütungen in Betracht.

Bei der Materialentnahmestelle des Fingers und/oder des Verbindungslements handelt es sich vorzugsweise um eine zentrale Materialentnahmestelle, so dass der Finger und/oder das Verbindungselement zumindest teilweise hohl ausgebildet sind. Dies kann in Bezug auf eine einfache Herstellung durch Bilden eines Sacklochs vom distalen Ende her in dem Finger erzielt werden oder aber in Bezug auf das Verbindungselement durch Einbringen, vorzugsweise jeweils einen Sacklochs von entgegengesetzten Enden des Verbindungselements. Alternativ ist es auch denkbar den Finger als Rohr bzw. das Verbindungselement als Hohlzylinder auszubilden, wodurch der Materialeinsatz verringert wird.

Weiter Vorteile und Merkmale der vorliegenden Erfindung, die alleinstehend oder in Kombination mit einem oder mehreren der oben genannten Merkmale zum Einsatz kommen können, sind der folgenden Beschreibung einer bevorzugten Ausführungsform zu entnehmen. Diese Beschreibung erfolgt unter Bezugnahme auf die begleitenden Zeichnungen, in denen:
Fig. 1 einen Teilschnitt eines Elektrowerkzeugs gemäß der vorliegenden Erfindung zeigt;
Fig. 2 eine perspektivische Darstellung der Nabe und des Fingers des Taumeltriebs zeigt;
Fig. 3 eine perspektivische Ansicht des Kolbens des Taumeltriebs zeigt;
Fig. 4 eine perspektivische Ansicht der Führungsaufnahme des Taumeltriebs zeigt; und
Fig. 5 eine perspektivische Ansicht eines Kurbeltriebs gemäß einer Ausführungsform der vorliegenden Erfindung zeigt.

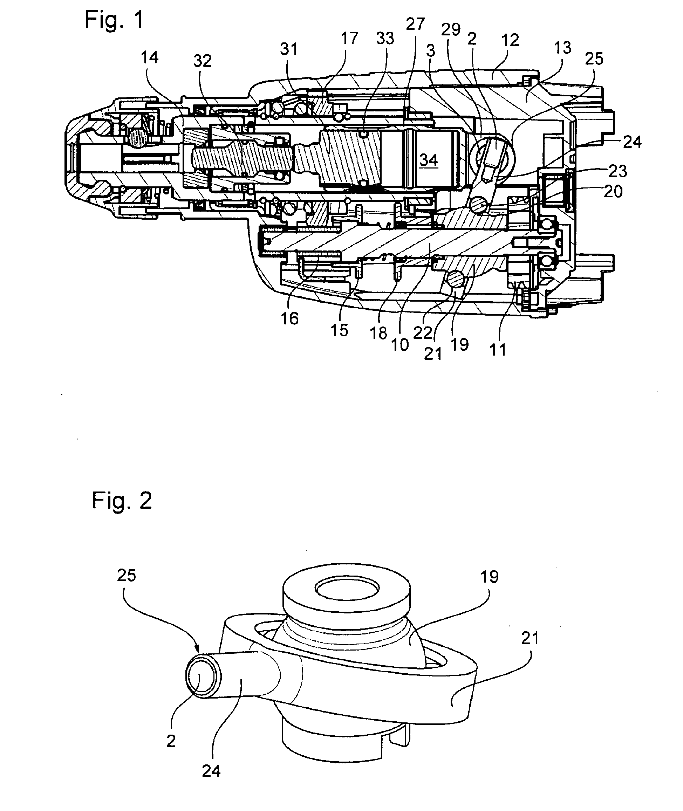

Im Folgenden wird unter Bezugnahme auf Fig. 1 ein Bohr- bzw. Kombihammer beschrieben, bei dem es sich um ein Beispiel eines Elektrowerkzeugs handelt, indem die vorliegenden Erfindung zum Einsatz kommen kann. Dabei beschränkt sich die folgende Beschreibung auf die für die Erfindung wesentlichen Elemente des Bohrhammers.

Das Elektrowerkzeug umfasst ein nicht dargestelltes Elektrowerkzeug mit einer nicht dargestellten Ankerwelle. Die Ankerwelle weist ein nicht dargestelltes Ritzel auf, das in Eingriff steht mit einem Zahnrad 11, das fest auf einer Vorgelegewelle 10 sitzt. Die Vorgelegewelle 10 ist drehbar in einem Getriebegehäuse 12 bzw. 13 aufgenommen.

Ferner weist das Elektrowerkzeug eine Bohrspindel 14 auf, die drehbar in dem Gehäuse 12 bzw. 13 aufgenommen ist. Die Bohrspindel 14 kann über eine erste Kupplungshülse 15, die formschlüssig mit der Vorgelegewelle 10 in Verbindung steht, über eine frei drehbar auf der Vorgelegewelle 10 gelagertes Zahnrad 16 und ein weiteres Zahnrad 17, das mit dem Zahnrad 16 in Eingriff steht, gedreht werden.

Des Weiteren ist eine zweite Kupplungshülse 18 vorgesehen, die gleichfalls formschlüssig mit der Vorgelegewelle 10 verbunden ist. Diese zweite Kupplungshülse 18 ist formschlüssig mit einer Nabe 19 (Fig. 2) eines Taumeltriebs verbindbar, um die Drehbewegung der Vorgelegewelle 10 auf die Nabe 19 zu übertragen.

Die Nabe 19 des Taumeltriebs ist frei drehbar auf der Vorgelegewelle 10 gelagert.

In der Außenfläche der Nabe 19 ist eine ringförmige Nut 20 vorgesehen, wobei die Mittelachse des Rings, der durch die Nut 20 gebildet ist, relativ zur Rotationsachse der Nabe 19 (hier gleich der der Vorgelegewelle 10) geneigt ist. Diese Nut 20 der Nabe 19 bildet den Innenring eines Kugellagers.

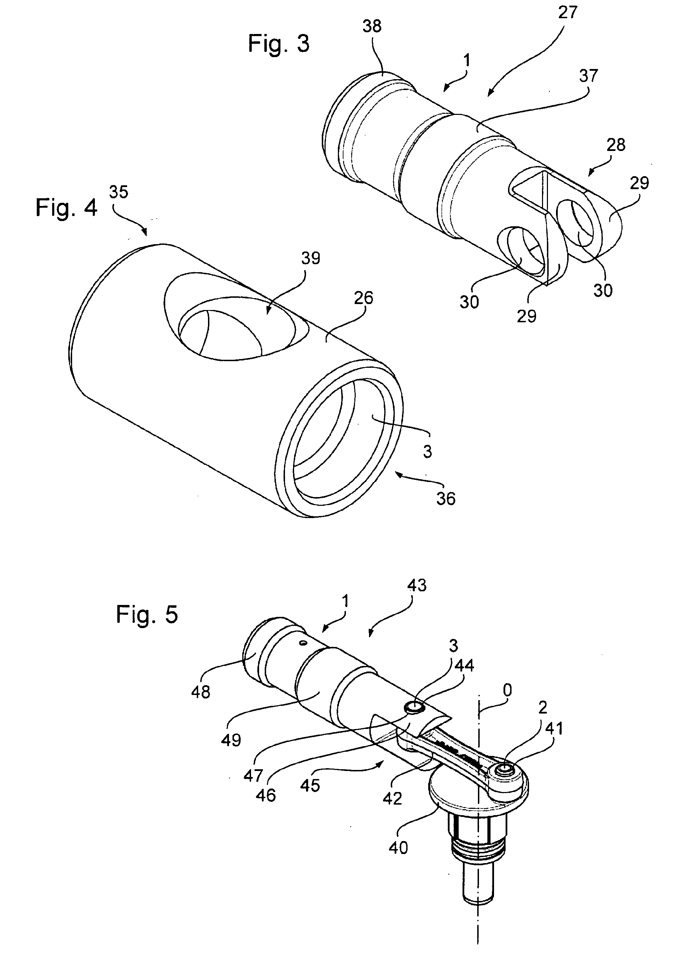

Des Weiteren umfasst der Taumeltrieb einen die Nabe 19 umgebenden Ring 21. Dieser Ring 21 weist in seiner Innenumfangsfläche gleichfalls eine umlaufende Nut 22 auf und bildet den Außenring des Kugellagers. In den Nuten 20, 22 sind entsprechend Kugeln 23 gelagert, so dass sich die Nabe 19 relativ zu dem Ring 21 frei drehen kann. Dieser Ring 21 weist ferner einen radial nach außen, d. h. von der Nabe 19 weg ragenden Finger 24, auf. Der Finger 24 bzw. sein distales Ende 25 ist in einer Führungsaufnahme 26 (Verbindungselement) (Fig. 4) aufgenommen. Die Führungsaufnahme 26 ist drehbar mit einem Kolben 27 (hier einem Hohlkolben), dem Zylinder, verbunden. Hierfür weist der Kolben 26 ein gabelförmiges Ende 28 auf. Die zwei Schenkel der Gabel 29 weisen jeweils eine kreisrunde Öffnung 30 (siehe Fig. 3) auf, in denen die Führungsaufnahme 26 drehbar aufgenommen ist. Das distale Ende 25 des Fingers 24 ist in einer Öffnung 30 in der Führungsaufnahme 26 aufgenommen, deren Mittelachse sich senkrecht zur Drehachse der Führungsaufnahme 26 im Kolben 27 erstreckt (siehe Fig. 4).

Die Bohrspindel 14 ist abschnittsweise hohlzylindrisch ausgestaltet und der Kolben 27 ist in dem Hohlzylinder der Bohrspindel 14 translatorisch geführt, wobei der Kolben 27 in der Bohrspindel 14 gleitet. Der Kolben 27 ist gleichfalls hohlzylindrisch ausgestaltet und nimmt einen Schlagkörper 31 auf, der in dem Hohlkolben 27 verschieblich geführt ist und über einen O-Ring 33 gegen die Innenwand des Hohlkolbens 27 abdichtet. Ferner ist ein translatorisch verschieblicher Döpper 32 aufgenommen, auf den der Schlagkörper 31 wirkt. Der Döpper 32 wiederum schlägt auf ein nicht dargestelltes und in einer Werkzeugaufnahme translatorisch verschieblich aufgenommenes Werkzeug.

Im Folgenden wird der Hammerbetrieb des Elektrowerkzeugs kurz beschrieben. Durch Rotation der Vorgelegewelle 10 und bei eingekuppelter Kupplungshülse 18 wird die Nabe 19 des Taumeltriebs um die Vorgelegewelle 10 rotiert. Durch diese Rotation und die geneigt angeordnete Nut 20 wird der Finger 24 hin und her (in Fig. 1 links und rechts) bewegt. Dadurch wird der Hohlkolben 27 hin und her (links und rechts) in der Bohrspindel 14 verschoben, wobei sich die Führungsaufnahme 26 in den Öffnungen 30 dreht. Dabei bildet sich in dem Raum 34 ein Luftpolster, das bei entsprechendem Druck den Schlagkörper 31 gegen den Döpper 32 schlägt. Der Döpper 32 schlägt daraufhin auf das Werkzeug, um die Schlagfunktion auszuführen.

Gemäß der vorliegenden Erfindung sind zur Vibrationsreduzierung die oszillierenden Massen in Form des Fingers 24 der Führungsaufnahme 26 sowie des Hohlkolbens 27 in ihrer Masse reduziert. Dies wird im Folgenden, insbesondere anhand der Fig. 2-4, näher erläutert.

Wie es aus den Fig. 1 und 2 ersichtlich ist, ist vom distalen Ende 25 her ein Sackloch 2 in den Finger 24 eingebracht, so dass der Finger 24 teilweise hohlzylindrisch ausgestaltet ist. Dadurch ist der Finger 24 um die Masse reduziert, die sonst das Material in dem Sackloch 2 eingenommen hätte. Alternativ ist es auch denkbar den Finger 24 als Rohr auszugestalten und mit dem Ring 21 zu verbinden. Dadurch könnte Material eingespart werden, das beim Erstellen des Sacklochs als Abfallprodukt anfällt.

Des Weiteren ist vorzugsweise, und wie es in Fig. 4 dargestellt ist, die Führungsaufnahme 26 hohlzylindrisch mit kreisrundem Querschnitt ausgebildet. D. h. die Führungsaufnahme 26 weist eine Durchgangsbohrung 3 auf, die sich vollständig durch die Führungsaufnahme 26 erstreckt. Dabei verläuft die Durchgangsbohrung 23 entlang der Rotationsachse der Führungsaufnahme 26 in den Öffnungen 30 des Hohlkolbens 27. Dadurch ist die Führungsaufnahme 26 im Vergleich zu einer Führungsaufnahme des Standes der Technik, um dass Material in ihrer Masse reduziert, das sonst in der Durchgangsbohrung 3 vorhanden wäre. Die Verwendung eines hohlzylindrischen Elements, das in dieser Form, beispielsweise durch Gieß- oder Umformverfahren hergestellt werden kann, ist hinsichtlich eines geringen Materialeinsatzes bevorzugt. Es ist jedoch auch denkbar von den beiden entgegengesetzten Enden 35, 36 her jeweils ein Sackloch ähnlich dem Sackloch 2 in dem Finger 24 vorzusehen, um gleichfalls eine Reduzierung der Masse zu bewirken.

Der Hohlkolben 27 weist als Materialentnahmestelle zur Reduzierung seiner Masse eine Vertiefung 1 auf. Diese Vertiefung 1 ist in der Außenfläche des Hohlkolbens 27 ausgebildet, die der Innenwandung der Bohrspindel 14 zugewandt ist. Dabei handelt es sich um eine um den hohlzylindrischen Hohlkolben 27 umlaufende Vertiefung, vorzugsweise eine vollständig umlaufende Vertiefung. Diese kann beispielsweise beim Abdrehen (Schlichten) des Hohlkolbens 27 bzw. dessen Außenfläche durch Quer-Stech-Drehen erstellt werden. Die Vertiefung 1 ist beidseits durch ringförmig umlaufende flächige Bereiche 37, 38 begrenzt. Diese flächigen Bereiche 37, 38 bilden die Führungsoberfläche zur Führung des Hohlkolbens 27 in der Bohrspindel 14. Alternativ zu der dargestellten Vertiefung können auch mehrere derartige Vertiefungen vorgesehen sein, die jeweils beidseits durch entsprechende Bereiche begrenzt sind.

Die Oberflächen dieser Bereiche 37, 38 können Oberflächen vergütet, z. B. gehärtet und/oder Reibung reduzierend ausgestaltet sein. Dies kann beispielsweise durch Anodisierung; Eloxierung, Keramisierung oder Beschichtung erzielt werden. Insbesondere, wenn bevorzugterweise für den Hohlkolben 27 ein Leichtmetall, wie beispielsweise Magnesium oder eine Magnesiumlegierung, verwendet werden, ist es bevorzugt den Hohlkolben 27 durch Anodisierung zu Härten. Durch die Anodisierung wird gleichzeitig die Oberflächenrauhigkeit der Bereiche 37, 38 reduziert, wodurch ein besseres Gleitverhalten an der Innenwandung der Bohrspindel 14 erzielt wird. Durch diese partielle Oberflächenbehandlung der Bereiche 37, 38 und ggf. der Innenflächen der Öffnungen 30 kann daher auch vorteilhafterweise an den notwendigen Bereichen eine harte und wenig raue, d. h. gut gleitende Oberfläche erzielt werden.

Gleichfalls können jedoch auch die Führungsaufnahme 26 und/oder der Finger 24 aus einem Leichtmetall, vorzugsweise dem gleichen wie der Hohlkolben 27 gebildet sein. Durch die oben beschriebene Massenreduzierung der Elemente des Taumeltriebs, hier des Fingers 24 der Führungsaufnahme 26 und des Hohlkolbens 27, wird die Masse der im Elektrowerkzeug bewegten Teile reduziert. Diese Reduzierung der Masse führt direkt zu einer Reduzierung der betriebsbedingten und im Gebrauch erzeugten Vibrationen des Elektrowerkzeugs. Durch die Verringerung der Vibrationen können die Standzeiten der erfindungsgemäßen Elektrowerkzeuge erhöht und die Vibrationsbelastung der Anwender reduziert werden. Gleichzeitig führt diese Massenreduzierung zu einer Reduzierung des Gesamtgewichts des Elektrowerkzeugs.

In einer zweiten alternativen Ausführungsform der vorliegenden Erfindung kommt das erfinderische Konzept in einem Kurbeltrieb zum Einsatz. Ein solcher Kurbeltrieb ist in Fig. 5 perspektivisch dargestellt. Hinsichtlich weiterer Details eines Kurbeltriebs wird der Fachmann auf die eingangs genannte DE 35 11 437 A1 verwiesen. Im Folgenden werden nur die wesentlichen Bestandteile des Kurbeltriebes erläutert.

Der Kurbeltrieb umfasst eine Kurbel 40, die durch beispielsweise einen Elektromotor und ein zwischengeschaltetes Getriebe (nicht dargestellt) antreibbar ist. Das heißt, die Kurbel 40 ist drehbar in dem Gehäuse des entsprechenden Elektrowerkzeuges gelagert. Die Drehachse ist in Fig. 5 mit der Bezugsziffer D angedeutet. Exzentrisch zu dieser Drehachse D der Kurbel 40 ist ein Finger 41 integral, d. h. einstückig, mit der Kurbel 40 ausgebildet oder fest mit dieser verbunden. Drehbar auf diesem Finger 41 gelagert und gehalten ist ein Pleuel 42, um die rotatorische Bewegung des Fingers 41 um die Drehachse D der Kurbel 40 in eine translatorische Bewegung des Zylinders 43 (hier ein Hohlkolben) umzusetzen. Das Pleuel 42 ist an seinem dem Finger 41 entgegengesetzten Ende über einen Bolzen 44, das Verbindungselement, drehbar mit dem Zylinder 43 verbunden. Vergleichbar mit der zuvor beschriebenen Ausführungsform weist der Zylinder 43 ein gabelförmiges Ende 45 mit zwei Schenkeln 46 auf, die jeweils eine kreisrunde Öffnung 47 umfassen, in welche der Bolzen 44 beispielsweise eingepresst werden kann. Das Pleuel 42 ist auf dem Bolzen 44 drehbar gelagert und über die Verbindung des Bolzens 44 in den kreisrunden Öffnungen 47 des gabelförmigen Abschnitts 45 an dem Zylinder 43 befestigt.

Das zylindrische Element 43 ist vergleichbar mit dem Kolben 27 der ersten Ausführungsform (Fig. 1) und beispielsweise in einer Bohrspindel 14 translatorisch verschieblich geführt. Der übrige Aufbau hinsichtlich Schlagwerk (31, 32) kann ähnlich der ersten Ausführungsform sein. Auf eine detaillierte Ausführung wird daher verzichtet.

Der Zylinder 43 aus Fig. 5 weist genau wie der Hohlkolben 27 aus Fig. 1 als Materialentnahmestelle zur Reduzierung seiner Masse eine Vertiefung 1 auf. Auch können Bereiche 48 und 49 ähnlich der flächigen Bereiche 37, 38 vorgesehen sein, die ggf. oberflächenvergütet sein können. Gleichfalls kann der Zylinder 43 aus Fig. 5 aus einem Leichtmetall, insbesondere Magnesium oder einer Magnesiumlegierung, oder Kunststoff gebildet sein. Bezüglich dieser Ausgestaltungen des Zylinders 43 wird zur Vermeidung von Wiederholungen auf die Beschreibung des Hohlkolbens 27 der ersten Ausführungsform verwiesen.

Bei dem Bolzen 44, dem Verbindungselement, handelt es sich vorzugsweise um einen hohlzylindrischen Bolzen 44. Dieser kann nachträglich ausgebohrt sein, um die Materialentnahmestelle 3 zu bilden. Alternativ und zur Verminderung des Materialeinsatzes kann der Bolzen 44 auch bereits als hohlzylindrisches Element (Rohr) ausgebildet werden.

Zur weiteren Reduzierung der Masse ist es bevorzugt, den Finger 41 von seinem distalen Ende her auszubohren und dadurch eine weitere Materialentnahmestelle 2 zu bilden. Alternativ ist es selbstverständlich auch hier denkbar, den Finger 41 als Rohr auszubilden und dieses Rohr mit der Kurbel 40 zu verbinden.

Neben dem Zylinder 43 können selbstverständlich auch der Bolzen 44, der Finger 41 und ggf. die Kurbel 40 aus einem Leichtmetall oder Kunststoff gebildet sein. Auch diesbezüglich wird auf die Beschreibung der entsprechenden Elemente des oben erläuterten Taumeltriebs für weitere Details verwiesen.

Bei dem in Fig. 5 dargestellten Kurbeltrieb führt die Reduzierung der Masse des Kurbeltriebs durch die Verwendung von Leichtmetallen oder Kunststoffen und das Vorsehen von Materialentnahmestellen 1 bis 3 direkt zu einer Reduzierung der betriebsbedingten und im Gebrauch erzeugten Vibrationen des Elektrowerkzeuges. Durch die Verringerung der Vibrationen können die Standzeiten der erfindungsgemäßen Elektrowerkzeuge erhöht und die Vibrationsbelastung der Anwender reduziert werden.

## Patentansprüche

1. Elektrowerkzeug, insbesondere Bohr- und/oder Meißelhammer oder Säbelsäge, umfassend:
eine antreibbare Welle (10),
ein Werkzeug; und
einen Taumeltrieb zum Übertragen einer Antriebskraft von der Welle (10) auf das Werkzeug, wobei der Taumeltrieb umfasst: eine über die Welle (10) drehbare Nabe (19), einen relativ zur Nabe (19) derart gelagerten radial nach außen ragenden Finger (24), dass sich das distale Ende (25) des Fingers (24) bei einer Rotation der Nabe (19) hin und her bewegt, ein Verbindungselement (26), das das distale Ende (25) des Fingers (24) aufnimmt, und einen mit dem Verbindungselement (26) drehbar verbundenen Zylinder (27), **dadurch gekennzeichnet, dass** wenigstens der Finger (24), das Verbindungselement (26) oder der Zylinder (27) aus einem Leichtmetall oder Kunststoff gebildet sind und/oder eine Materialentnahmestelle (1, 2, 3) aufweisen, die ausschließlich der Reduzierung der Masse des Fingers (24), des Verbindungselements (26) bzw. des Zylinders (27) dient.

2. Elektrowerkzeug, insbesondere Bohr- und/oder Meißelhammer oder Säbelsäge, umfassend:
eine antreibbare Welle,
ein Werkzeug; und
einen Kurbeltrieb zum Übertragen einer Antriebskraft von der Welle auf das Werkzeug, wobei der Kurbeltrieb umfasst: eine über die Welle drehbare Kurbel (40), einen exzentrisch an der Kurbel (40) befestigten nach außen ragenden Finger (41), ein auf dem Finger (41) drehbar gelagertes Übertragungsglied, insbesondere ein Pleuel(42), das über ein Verbindungselement drehbar an einem Zylinder (43) befestigt ist, wodurch sich der Zylinder (43) bei einer Rotation der Kurbel (41) hin und her bewegt, **dadurch gekennzeichnet, dass** wenigstens der Finger (41), das Verbindungselement (44) oder der Zylinder (43) aus einem Leichtmetall oder Kunststoff gebildet sind und/oder eine Materialentnahmestelle (1, 2, 3) aufweisen, die ausschließlich der Reduzierung der Masse des Fingers (41), des Verbindungselements (44) bzw. des Zylinders (43) dient.

3. Elektrowerkzeug nach Anspruch 1 oder 2, bei dem wenigstens der Finger (24; 41), das Verbindungselement (26; 44) oder der Zylinder (27; 43)aus Magnesium, Aluminium oder Titan oder einer Legierung davon gebildet ist.

4. Elektrowerkzeug nach Anspruch 1, 2 oder 3, bei dem die Materialentnahmestelle in dem Zylinder (27; 43) durch eine Vertiefung (1) in dessen Außenfläche gebildet ist.

5. Elektrowerkzeug nach Anspruch 4, bei dem die Vertiefung (1) beidseits durch umlaufende, flächige Bereiche (34, 38; 48, 49) begrenzt ist.

6. Elektrowerkzeug nach Anspruch 5, bei dem die flächigen Bereiche (34, 38; 48, 49) jeweils einer Oberflächenvergütung unterzogen sind.

7. Elektrowerkzeug nach einem der vorstehenden Ansprüche, bei dem der Finger (24; 41) und/oder das Verbindungselement (26; 44) zumindest teilweise hohl ausgebildet sind, um die Materialentnahmestelle (2, 3) zu bilden.

8. Elektrowerkzeug nach Anspruch 7, bei dem vom distalen Ende her ein Sackloch (2) in den Finger (24; 41) eingebracht ist.

9. Elektrowerkzeug nach Anspruch 7, bei dem der Finger (24; 41) als Rohr ausgebildet ist.

10. Elektrowerkzeug nach einem der Ansprüche 7 bis 9, bei dem das Verbindungselement (26; 44) ein Hohlzylinder ist.

11. Elektrowerkzeug nach einem der Ansprüche 7 bis 9, bei dem von wenigstens einem Ende ein Sackloch in das Verbindungselement (26; 44) eingebracht ist.
